# NEUE EUROPÄISCHE PATENTSCHRIFT

(11) **EP 2 318 162 B2**
(45) Veröffentlichungstag und Bekanntmachung des Hinweises auf die Entscheidung über den Einspruch: **04.10.2017**
(45) Hinweis auf die Patenterteilung: 29.05.2013
(21) Anmeldenummer: 09777551.4
(22) Anmeldetag: 30.07.2009
(51) Int. Cl.: G01F 23/24, B22D 11/18, B22D 11/20, G01F 23/292, B22D 2/00

(54) **GIESSSPIEGELMESSUNG IN EINER KOKILLE DURCH EIN FASEROPTISCHES MESSVERFAHREN**
CASTING LEVEL MEASUREMENT IN A MOLD BY MEANS OF A FIBER OPTIC MEASURING METHOD
MESURE DU NIVEAU DU BAIN DE COULÉE DANS UN MOULE PAR PROCÉDÉ DE MESURE À FIBRE OPTIQUE

(30) Priorität: 31.07.2008 DE 102008035608; 02.12.2008 DE 102008060032
(43) Veröffentlichungstag der Anmeldung: 11.05.2011
(73) Patentinhaber: SMS group GmbH, 40237 Düsseldorf (DE)
(72) Erfinder: ARZBERGER, Matthias, 45470 Mülheim (DE); LIEFTUCHT, Dirk, 48739 Legden (DE); PLOCIENNIK, Uwe, 40882 Ratingen (DE)
(74) Vertreter: Klüppel, Walter
(86) Internationale Anmeldenummer: PCT/EP2009/005529
(87) Internationale Veröffentlichungsnummer: WO 2010/012468

(56) Entgegenhaltungen:
- WO-A1-2008/084637
- WO-A2-2004/015349
- DE-A1- 2 854 515
- FR-A1- 2 538 545
- JP-A- 4 351 254
- JP-A- 6 294 685
- JP-A- 9 085 406
- JP-A- 11 083 601
- JP-A- 57 154 364
- JP-A- 60 027 819
- JP-A- 2000 111 387
- JP-A- 2003 302 277
- JP-A- 2007 132 746
- US-A1- 2008 130 707
- WANG Z ET AL: "IN SITU NON CONTACT INFRARED TEMPERATURE AND EMITTANCE MEASUREMENT STUDY OF HIGHLY REFLECTIVE MATERIALS BY ACE-FAST" ADVANCES IN INSTRUMENTATION AND CONTROL, INSTRUMENT SOCIETY OF AMERICA, RESEARCH TRIANGLE PARK, US, Bd. 48, Nr. PART 02, 1. Januar 1993 (1993-01-01), Seiten 1051-1063, XP000435406 ISSN: 1054-0032

## Beschreibung

### Gebiet der Erfindung

Die Erfindung stellt ein System und ein Verfahren zur Gloßspiegelmessung in einer Kokille mittels einer oder mehrerer Messfasern und/oder mittels Sonden zur faseroptischen Temperaturerfassung, die in der Kokillen-Kupferplatte auf Höhe des Gießspiegels angeordnet werden, zur Verfügung. Mithilfe der durch die Sonden zur faseroptischen Temperaturerfassung ermittelten Temperaturen kann auf die genaue Höhe des Gießspiegels geschlossen werden.

### Stand der Technik

Ein bekanntes und übliches Verfahren zur Bestimmung der Höhe des Gießspiegels verwendet radioaktive Partikel, die in die Kokille eingebracht werden, wobei die emittierte Strahlung In den verschiedenen Höhen der Kokille gemessen wird, wodurch auf die Höhe des Gießspiegels geschlossen wird. Zur Verbesserung der Messung ist es möglich eine höhere Dichte solcher Partikel in die Kokille einzubringen.

Solche Verfahren haben den Nachteil, dass sie immer verschärfteren Strahlenschutzverordnungen genügen müssen. Die Verwendung von radioaktiven Materialien behindert einfache Wartungsarbeiten und setzt teure Quellen für diese Materialien voraus. Außerdem sind diese Verfahren nicht für eine Bestimmung der Form einer Gießspiegelwelle geeignet, aus deren Form man nützliche Informationen über andere Gloßparameter, wie zum Beispiel die Gießgeschwindigkeit, erlangen kann.

Weiterhin sind Verfahren bekannt, bei denen der Gießspiegel der Kokille durch eine Temperaturerfassung mit Hilfe von Thermoelementen bestimmt wird.

Diese Verfahren haben den Nachteil, dass die Thermoelemente in der Praxis nicht in sehr engen Abständen angeordnet werden können. Außerdem wird für jeden einzelnen Messpunkt ein einzelnes Thermoelement benötigt, sodass dadurch auch ein großer materieller Aufwand entsteht und vor allem ein großer Verkabelungsaufwand. Schließlich sind die Thermoelemente auch in Bezug auf die magnetischen Felder einer elektromagnetischen Bremse oder von elektromagnetischen Rührspulen anfällig. Beim regelmäßigen Wechsel der Kokille ist darüber hinaus ein umständliches Neuanschließen der Kabel notwendig, wobei Verwechselungen auftreten oder Verbindungen vergessen werden können.

EP 1 769 864 beschreibt ein Verfahren zur Bestimmung eines Badspiegels einer Stranggießkokille, bei dem eine Kamera verwendet werden soll, die auf die Rückseite der Kupferplatte einer Kokille gerichtet ist und die Farbveränderungen der Kokillenkupferplatte im Infrarotbereich detektiert. Nachteilig an einer solchen Anordnung ist, dass ein solches Kamerasystem viel Platz benötigt und zudem eine Überwachung des Gießspiegels im Allgemeinen durch Kühlwasserkomponenten hinter der Kokillen-Kupferplatte stark erschwert wird. Werden dem Verfahren gemäß Lichtwellenleiter verwendet, um die Infrarotstrahlung direkt von Punkten der Kokillen-Kupferplatte zu der Kamera zu leiten, benötigt man für jeden Messpunkt einen Lichtwellenleiter, der zur Kamera geführt und korrekt verbunden werden muss.

Die Offenlegungsschrift DE 26 55 640 offenbart eine Vorrichtung zur Bestimmung des Schmelzenspiegels in einer Stranggießkokille, wobei ein Detektorelement aus einem wärmeempfindlichen magnetischen Material verwendet wird. Durch die Temperaturänderung in der Kokillenwand kann dann letztendlich auf die Gießspiegelhöhe geschlossen werden. Die großzügige Anordnung dieses Systems macht eine hoch-ortsaufgelöste Gießspiegelerfassung unmöglich. Weiterhin ist dieses Verfahren störanfällig in Bezug auf externe magnetische Felder, wie sie bereits oben genannt wurden. Auch mit mehreren dieser Vorrichtungen ist es nicht möglich eine hinreichende Information über die Form einer Gießspiegelwelle zu erlangen.

Die JP 09 085406 offenbart ein Verfahren zur Bestimmung der Gießspiegelhöhe einer Stranggießkokille, bei dem zur Messung der Leuchtdichte auf den Breitseiten und den Schmalseiten der Kokille jeweils mehrere, in Schlitze angeordnete, Lichtwellenleiter eingebracht werden. Über eine anschließende Regelung wird diese Verteilung der Leuchtdichte ausgewertet, die Gießgeschwindigkeit geregelt und somit die Höhe des Gießspiegels bestimmt.

Die JP 04 351254 und die JP 06 294685 beschreiben eine Vorrichtung zur Messung der Gießspiegelhöhe in einer Stranggießkokille, bei der über die gesamte Höhe der Kokille mindestens ein Lichtwellenleiter auf der Heißseite der Kokille angeordnet ist und zur Regelung der Gießspiegelhöhe mit einem Temperaturauswertesystem verbunden ist.

Die DE 28 54 515 verwendet die Wärmestrahlung der Schmelze zur Bestimmung der Gießspiegelhöhe. Über Infrarot Pegelsensoren werden die Informationen über die Temperaturverteilung abgenommen und als analoge oder digitale elektrische Signale an die Signalverarbeitung weitergeleitet.

Die gattungsbildende Veröffentlichung von Li, Xiaochun; Wong, Chee Wei; Dornfeld, David; & Thomas, Brian. (2006), "Research on Subwavelength Microphtonic Sensors for In-situ Monitoring with High Spatial and Temporal Resolution in Manufacturing Environments", Proceedings of 2006 NSF Design, Service, and Manufacturing Grantees and Research Conference, St. Louis, Missouri, 9p, July 24-27-2006 offenbart ein System zur Bestimmung der Temperaturverteilung in einer Kokille, umfassend eine Kokillen-Kupferplatte und eine Sonde, wobei die Sonde mit mindestens einem Lichtwellenleiter versehen ist.

Die JP H08-276257 offenbart ein System zur Bestimmung der Temperaturverteilung in einer Kokille, umfassend optische Fasern, die in Rohre aus rostfreiem Stahl mit Wärmebeständigkeit eingesetzt sind, und die in mehreren Zeilen in einer Nut der Kupferplatte eingebettet sind.

Die technische Aufgabe, die sich somit stellt, ist die oben genannten Nachteile zu beheben.

### Offenbarung der Erfindung

Die oben formulierte technische Aufgabe wird durch die vorliegende Erfindung gelöst und ist durch ein System gemäß Anspruch 1, ein System gemäß Anspruch 4, ein System gemäß Anspruch 6, und ein Verfahren gemäß Anspruch 9.

Die Erfindung ermöglicht eine zuverlässige und hoch-ortsaufgelöste Erfassung des Gießspiegels in einer Kokille. Es müssen keine Strahlungsrichtlinien, wie im Rahmen der radioaktiven Detektionsmethoden berücksichtigt werden. Das System hat außerdem eine höhere Ortsauflösung als sie mit Thermoelementen möglich wäre. Zudem entfällt der Verkabelungsaufwand solcher Systeme. Es existiert keine Störanfälligkeit gegenüber umgebenden magnetischen Feldern. Das System ist leicht in eine bestehende Kokillen-Kupferplatte zu integrieren und ist zugleich wiederverwendbar.

Weitere Gestaltungen der Erfindung sind gemäß den Unteransprüchen 2, 3, 5, 7, 8 und 10-12.

### Kurze Beschreibung der Figuren

Im Folgenden werden kurz die Figuren der Ausführungsbeispiele beschrieben, wobei die Ausführungsbeispiele detaillierter in der darauf folgenden Beschreibung erläutert werden. Dabei zeigt:
- Figur 1a: ein Ausführungsbeispiel einer erfindungsgemäßen Sonde zum Einbau in eine Nut in der Kupferplatte einer Kokille;
- Figur 1b: eine Draufsicht des mit Messstellen versehenen Bereichs aus Figur 1a;
- Figur 2: ein weiteres Ausführungsbeispiel einer erfindungsgemäßen Sonde zum Einbau in eine Bohrung in einer Kupferplatte der Kokille;
- Figur 3a: ein weiteres Ausführungsbeispiel einer erfindungsgemäßen Sonde, die die Form einer Platte besitzt;
- Figur 3b: ein Ausführungsbeispiel der Sonde aus Figur 3a, in Draufsicht von der der Schmelze zugewandten Seite der Sonde, wobei eine Lichtleiterfaser spiralförmig in Nuten auf der Platte angeordnet ist;
- Figur 3c: ein weiteres Ausführungsbeispiel einer Sonde nach Figur 3a, wobei auf der der Schmelze zugewandten Seite der Sonde, Lichtleiterfasern in Nuten mäanderförmig angeordnet sind;
- Figur 3d: ein weiteres Ausführungsbeispiel einer Sonde nach Figur 3a, wobei im Wesentlichen mehrere Lichtwellenleiterfasern in Nuten auf der der Schmelze zugewandten Seite angeordnet sind;
- Figur 4: einen schematischen dreidimensionalen Querschnitt einer Kokille nach einem Ausführungsbeispiel der Erfindung, wobei in einer Kupferplatte einer Breitseite der Kokille eine Sonde nach Figur 1 angeordnet ist;
- Figur 5: einen schematischen dreidimensionalen Querschnitt einer Kokille nach einem weiteren Ausführungsbeispiel der Erfindung, wobei in einer Bohrung in einer Kupferplatte auf der Breitseite der Kokille eine Sonde nach Figur 2 angeordnet ist;
- Figur 6: einen schematischen dreidimensionalen Querschnitt einer Kokille nach einem weiteren Ausführungsbeispiel der Erfindung, wobei in der Kupferplatte einer Breitseite der Kokille, auf der der Schmelze abgewandten Seite, eine Sonde nach einer der Figuren 3a, 3b, 3c oder 3d angeordnet ist;
- Figur 7: einen schematischen dreidimensionalen Querschnitt einer Kokille nach einem weiteren Ausführungsbeispiel der Erfindung, wobei in einer Kupferplatte der Breitseite einer Kokille eine Sonde vorgesehen ist, die aus einem einzelnen Lichtwellenleiter besteht, der in einer Bohrung, die senkrecht zum Gießspiegel verläuft, angeordnet ist.

### Detaillierte Beschreibung der Ausführungsbeispiele

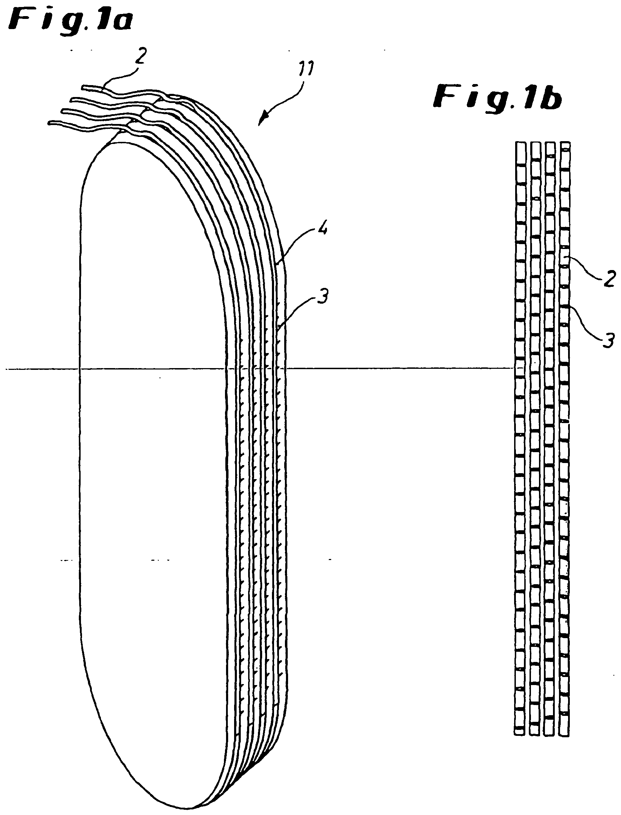

In Figur 1a ist ein erfindungsgemäßes Ausführungsbeispiel einer Sonde 11 gezeigt. Sichtbar ist ein im Wesentlichen quaderförmiger Körper der Sonde 11, der am oberen und am unteren Ende bogenförmig abgerundet ist. In der Sonde 11 sind vier Nuten 4 vorgesehen in denen jeweils ein Lichtwellenleiter (Lichtwellenleiterfaser) bzw. ein faseroptischer Sensor 2 angeordnet ist. Zusätzlich sind Messstellen 3 gezeigt, an denen die Temperatur bestimmt werden kann. Die Sonde 11 kann zum Beispiel in eine Nut in der der Schmelze abgewandten Seite einer Kokillen-Kupferplatte eingebaut werden, so dass die Lichtwellenleiter 2 in Richtung der Schmelze orientiert sind. Dabei erfolgt der Einbau der Sonde 11 so, dass die Lichtwellenleiter 2 in direktem Kontakt mit der Kupferplatte stehen und zwischen Wasserkühlung der Kupferplatte und der Schmelze, in Richtung der Schmelze, angeordnet sind. Die gezeigte Sonde 11 kann auch andere Geometrien aufweisen, solange sie geeignet ist, in eine Nut einer Kokillen-Kupferplatte eingebaut zu werden. Diese Sonde, bzw. Nutensonde 11, kann auch in bereits bestehende Systeme integriert werden, in dem sie (auch zusätzlich zu bestehenden Systemen zur Temperaturüberwachung) in eine Nut in einer Kupferplatte montiert wird.

Figur 1b zeigt eine vergrößerte Draufsicht des Bereichs aus Figur 1a in dem sich die Messstellen 3 der Lichtwellenleiter 2 befinden. In diesem Ausführungsbeispiel beträgt die gesamte vertikale Abmessung dieses Bereichs 120 mm. In diesem Bereich sind die vier nebeneinanderliegenden Lichtwellenleiter 2 angeordnet. Die gesamte Breite des dargestellten Bereichs beträgt ca. 5 mm, wodurch die Sonde 11 sehr kompakt ist. Der Abstand der einzelnen parallelen Lichtleiter 2 und damit der Breitenabstand der Messstellen 3 beträgt ca. 1 mm. Der vertikale Abstand der Messstellen 3 eines Lichtwellenleiters 2 beträgt im Ausführungsbeispiel 4 mm. Durch die in Figur 1b dargestellte vorteilhafte Versetzung der Lichtwellenleiter 2 sind jedoch in vertikaler Richtung der Sonde 11 Messstellen 3 in Abständen von 1 mm vorhanden, da die vier parallelen Lichtwellenleiter 2 jeweils um 1 mm der Länge nach versetzt angeordnet sind. Somit ergeben sich auf einer Länge von 120 mm 120 Messstellen 3. Die Abstände der Lichtwellenleiter 2, die Größe der Sonde 11, die Anzahl an Nuten 4 und Lichtwellenleitern 2 sowie der Abstand der Messstellen 3, kann je nach Anwendung auch anders gewählt werden, so dass sich beliebige Dichten von Messstellen 3 realisieren lassen. Alle genannten Abmessungen dienen lediglich einem besseren Verständnis des Ausführungsbeispiels.

Weiterhin ist es möglich, zur Verbesserung der Ortsauflösung mehrere Lichtwellenleiterfasern 2 versetzt innerhalb einer Nut 4 anzuordnen. Dadurch kann die Genauigkeit der Temperaturerfassung noch weiter verbessert werden.

Der Durchmesser der Nuten 4 kann im Allgemeinen vorzugweise zwischen 0,5 mm und 10 mm liegen oder je nach Anwendung auch mehrere Zentimeter groß sein.

Die in den Figuren 1a und 1b gezeigten Lichtwellenleiter 2, werden mit einem entsprechenden Temperaturauswertungssystem verbunden, wobei Laserlicht in die Lichtwellenleiter 2 geleitet wird und mit Hilfe eines geeigneten Auswerteverfahrens die Temperatur entlang des jeweiligen Lichtwellenleiters bestimmt werden kann. Die Auswertungsmethode für das faseroptische Messverfahren ist das bekannte Faser-Bragg-Gitter-Verfahren (FBG-Verfahren). Bei diesem Verfahren werden Lichtwellenleiter 2 verwendet, die Messstellen mit einer periodischen Variation des Brechungsindex, bzw. Gitter mit solchen Variationen, eingeprägt bekommen. Solche Messstellen 3 sind in den Figuren 1a und 1b eingezeichnet. Diese periodische Variation des Brechungsindex führt dazu, dass der Lichtwellenleiter 2 in Abhängigkeit der Periodizität für bestimmte Wellenlängen an den Messstellen 3 einen dielektrischen Spiegel darstellt. Durch eine Temperaturänderung an einem Punkt wird die Bragg-Wellenlänge verändert, wobei genau diese reflektiert wird. Licht, das die Bragg-Bedingung nicht erfüllt, wird durch das Bragg-Gitter nicht wesentlich beeinflusst. Die verschiedenen Signale der unterschiedlichen Messstellen 3 können dann aufgrund von Laufzeitunterschieden voneinander unterschieden werden. Der detaillierte Aufbau solcher Faser-Bragg-Gitter, sowie der entsprechenden Auswerteeinheiten sind allgemein bekannt. Die Genauigkeit der Ortsauflösung ist durch den Abstand der eingeprägten Messstellen gegeben.

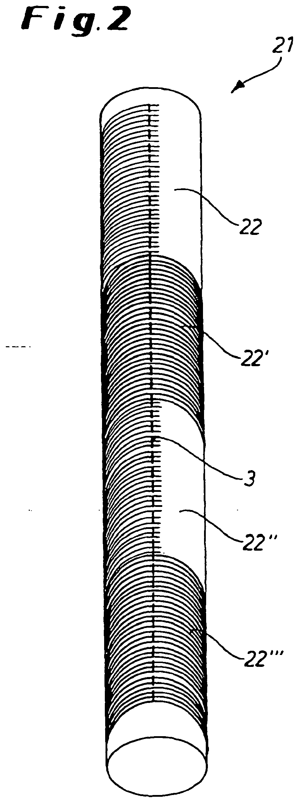

Figur 2 zeigt ein weiteres Ausführungsbeispiel einer Sonde zur Temperaturmessung gemäß der Erfindung. Die gezeigte Sonde 21 hat im Wesentlichen die Form eines langestreckten Zylinders oder Stabs, auf dem Lichtwellenleiter 2 spiralförmig aufgewickelt sind. Es ist auch möglich diese Lichtwellenleiter 2 in derselben Form in Nuten auf der Oberfläche des Zylinders vorzusehen. Insbesondere sind in der Figur 2 vier Lichtwellenleiter 2 auf dem Zylinder aufgewickelt. Jeder einzelne dieser vier Lichtwellenleiter ist dabei in einem Bereich (22, 22', 22", 22"') angeordnet, der nur von diesem einen Lichtwellenleiter 2 überwacht wird. Die spiralförmige Anordnung der Lichtwellenleiter ermöglicht senkrecht zum Gießspiegel eine größere Dichte an Messstellen 3. Die Anschlüsse der Lichtwellenleiter 2 sind nicht in der Zeichnung sichtbar. Eine solche Sonde 21 kann dann in einer Bohrung in einer Kokillen-Kupferplatte angeordnet werden, die senkrecht zum Gießspiegel erfolgt. Die Bohrung ist je nach Anwendung minimal größer zu wählen als der Durchmesser der Sonde 21 inklusive der Lichtwellenleiter 2. Insbesondere hat die in Figur 2 gezeigte Sonde 21 einen mit Lichtleitern 2 versehenen Messbereich von 120 mm, welcher in vier Bereiche (22, 22', 22", 22"') von jeweils 30 mm unterteilt ist. Dabei ist die gezeigte Sonde 21 gerade so gewickelt, dass sich auf ihrer der Schmelze zugewandten Seite die Messstellen 3 befinden. Diese Messstellen 3 liegen auf einer Linie und besitzen einen Abstand von 1 mm. Somit befinden sich entlang der Sonde 21 120 Messstellen auf einer Länge von 120 mm. Es ist zudem möglich auch nur einen Lichtwellenleiter 2 auf der Oberfläche der Sonde 21 oder in entsprechenden Nuten vorzusehen. Auch eine andere Anzahl von Lichtwellenleitern 2 in Bereichen (22, 22', 22", 22"') und andere Anzahlen von Bereichen (22, 22', 22", 22"') sind möglich. Alle genannten Maße dienen lediglich dem besseren Verständnis. Die Sonde 21 kann zur Temperaturüberwachung in jeder Höhe der Kokille eingebaut werden, insbesondere aber in der Höhe Gießspiegels, wodurch eine Bestimmung der genauen Gießspiegelhöhe ermöglicht wird. Die Auswertung der von der Sonde 21 gesammelten Informationen erfolgt nach einem der Verfahren der Beschreibung zu den Figuren 1 a und 1 b.

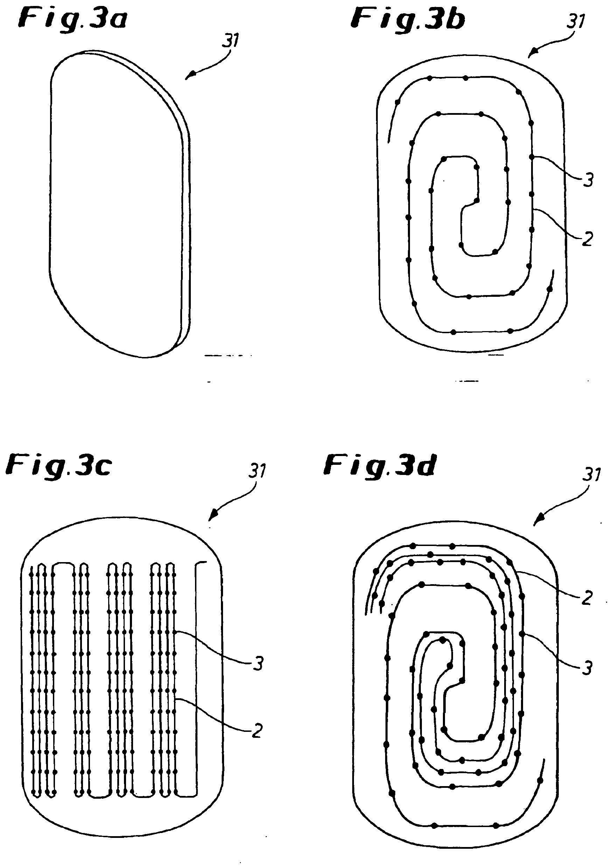

Figur 3a zeigt ein weiteres erfindungsgemäßes Ausführungsbeispiel einer Sonde. Diese Sonde 31 hat im Wesentlichen die Form einer Platte, bzw. ist flächenförmig. Eine solche Sonde 31 kann entweder auf der der Schmelze abgewandten Seite der Kupferplatte verbaut sein oder in einem Schlitz in der Kupferplatte Auf der Sonde werden dabei, wie in den Figuren 3b, 3c und 3d beispielhaft gezeigt, Lichtwellenleiter 2 in entsprechenden Nuten angeordnet, die in Kontakt mit der Kokillen-Kupferplatte in Richtung der Schmelze stehen.

Die Anordnung der Lichtwellenleiter 2 bzw. der Nuten kann dabei spiralförmig, wie in Figur 3b gezeigt, erfolgen. Sichtbar sind zudem mehrere Messstellen 3 des Lichtleiters 2.

Figur 3c zeigt eine ähnliche Anordnung wie Figur 3b, jedoch mit einer mäanderförmigen Anordnung der Lichtwellenleiter 2, bzw. der Nuten. Zur Überwachung des Gießspiegels wird die Sonde 31 mit den Lichtwellenleitern 2 vorzugsweise so angeordnet, dass möglichst viele Lichtwellenleiter 2 senkrecht zum Gießspiegel angeordnet sind, wodurch eine genaue Höhenmessung ermöglicht wird. Zudem wird durch die flächenhafte Anordnung der Lichtwellenleiter 2 auf der plattenförmigen Sonde 31 eine Auflösung der Gießspiegelhöhe in Breitenrichtung erreicht, wodurch es besser möglich ist Informationen über die Form der Gießspiegelwelle zu erhalten.

Figur 3d zeigt eine weitere Möglichkeit der Anordnung von Lichtwellenleitern 2 auf einer plattenförmigen Sonde 31, wobei zwei bzw. mehrere Lichtwellenleiter 2 spiralförmig auf der Platte bzw. in Nuten angeordnet sind. In diesem Falle ist ein Lichtwellenleiter 2 schleifenförmig verlegt, so dass sich sein Anfang und sein Ende an der gleichen Stelle befinden.

In den Ausführungsbeispielen nach den Figuren 3a, 3b, 3c, 3d können auch mehrere Lichtwellenleiter 2 einer Nut vorgesehen sein. Außerdem können diese der Länge nach versetzt angeordnet werden, um die Anzahl und die Dichte der Messstellen weiter zu erhöhen.

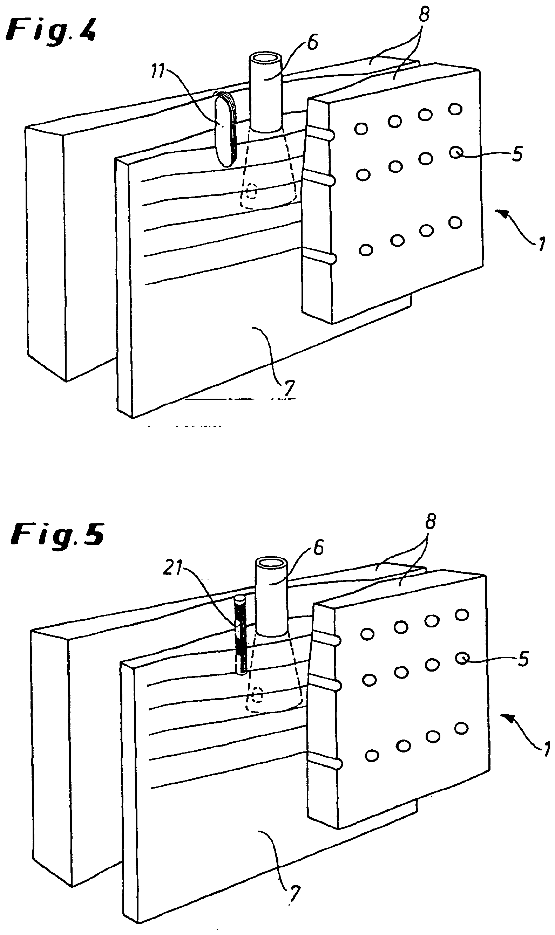

Figur 4 zeigt schematisch die Einbausituation einer Sonde 11 nach Figur 1. Sichtbar sind in der Abbildung die Kupferplatten der Breitseiten der Kokille 8, die Schmelze 7 und das Gießrohr 6. Das Gießrohr 6 mündet unterhalb des Gießspiegels in die Schmelze 7. Durch die ausströmende Schmelze 7 und die sich insgesamt nach unten bewegende Schmelze 7 in der Kokille bildet sich häufig eine Welle, bzw. eine stehende Welle, in Höhe des Gießspiegels aus. In Höhe des Gießspiegels ist eine Sonde 11 nach Figur 1 verbaut. Diese Sonde 11 ist in einer Nut in der Kokillen-Kupferplatte verbaut und ist vorzugsweise so angeordnet, dass sie die Temperatur der Kupferplatte 8 in Richtung der Schmelze 7 messen kann, ohne durch eine dahinterliegende Wasserkühlung zu stark beeinflusst zu werden. Daher ist die Zeichnung nur als schematisch anzusehen. Die sichtbaren Bereiche 5 in den Breitseiten der Kokille sind Löcher von Dehnschrauben bzw. Orte an denen bspw. Thermoelemente zur Temperaturmessung angeordnet sein können. Diese können jedoch nicht zur Bestimmung des Gießspiegels dienen.

Figur 5 zeigt schematisch eine Einbausituation einer Sonde 21 nach Figur 2. Die Anordnung der Kokille selbst entspricht Figur 4, wobei die verwendete Sonde 21 aber in eine Bohrung in einer Kokillen-Kupferplatte 8 auf der Breitseite der Kokille angeordnet ist. Die Sonde 21 deckt dabei einen Bereich oberhalb und unterhalb des Gießspiegels ab, ebenso wie die Sonde 11 in Figur 4. Zwischen der Sonde 21 und dem Gießspiegel bzw. der Schmelze 7 befindet sich somit lediglich das Kupfer der Kupferplatte 8, so dass eine genaue Temperaturerfassung möglich ist.

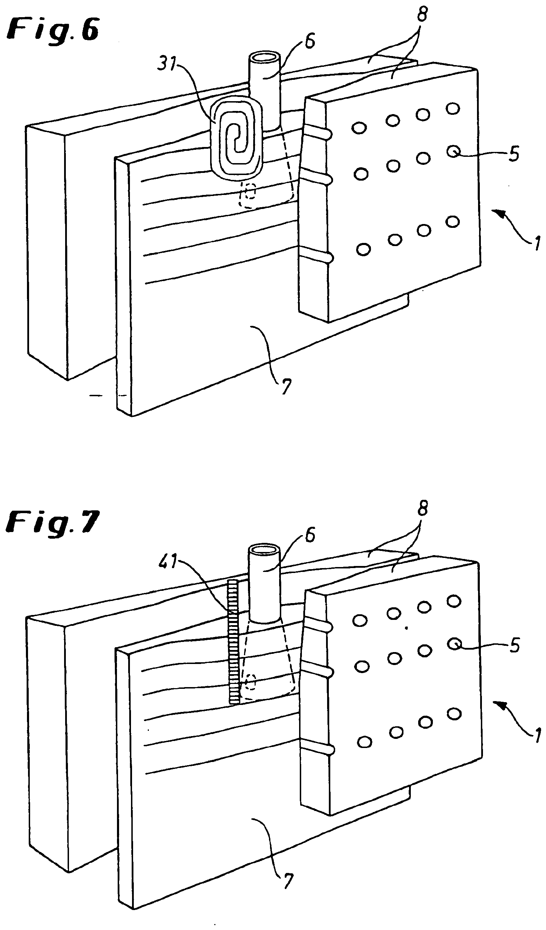

Figur 6 zeigt die Anordnung einer Sonde 31 nach Figur 3 in einer Kokillen-Kupferplatte 8 einer Breitseite der Kokille. Die Sonde 31 ist in einem senkrecht zum Gießspiegel stehenden Schlitz der entsprechenden Kokillen-Kupferplatte 8 verbaut, wobei die faseroptischen Sensoren 2 auf der Seite der Sonde 31 angebracht sind, die der Schmelze zugewandt ist. Die Platte mit den Sensoren 2 könnte generell auch auf der der Schmelze 7 abgewandten Seite der Kokillen-Kupferplatte 8 in einer entsprechenden Aussparung eingebaut sein. Die Sonde 31 deckt dabei einen Messbereich ober- und unterhalb der Schmelze 7 ab. Zudem kann eine so angeordnete Sonde 31 auch Informationen senkrecht zur Gießrichtung bzw. in Breitenrichtung des Gießspiegels liefern. Damit können Aussagen über die Form und die Veränderung einer auftretenden Gießspiegelwelle getroffen werden. Dies ist auch durch die Sonden der Figuren 1, 2 und 7 möglich, allerdings werden dann mehrere dieser Sonden senkrecht zur Gießrichtung auf Gießspiegelhöhe angeordnet.

Figur 7 zeigt eine weitere erfindungsgemäße Sonde 41 in einer Breitseite einer Kokillen-Kupferplatte 8. Die Sonde 41 besteht dabei aus einem Lichtwellenleiter 2, der in einer Bohrung senkrecht zum Gießspiegel im Bereich des Gießspiegels angeordnet ist. Solche Bohrungen können einen Durchmesser besitzen, der nur wenig größer ist als der Durchmesser eines Lichtwellenleiters, bzw. einer Lichtwellenleiterfaser oder eines Lichtwellenleiters inklusive einer möglichen Ummantelung, z. B. aus Edelstahl.

Der Messbereich der bei allen Sonden der Ausführungsbeispiele je nach spezieller Beschaffenheit der Kokille abgedeckt werden soll erstreckt sich vorzugsweise zwischen 100 mm und 200 mm, kann aber auch größer oder kleiner gewählt werden.

Es ist denkbar, solche Sonden in jeder Höhe der Kokille anzuordnen, zum Beispiel auch im unteren Bereich der Kokille. Dieser Bereich kann sich zum Beispiel zwischen 0 mm und 900 mm von der unteren Kante der Kokille erstrecken. Mit einer so angeordneten Sonde, kann der Angießvorgang besser charakterisiert und kontrolliert werden.

Alle in den Ausführungsbeispielen gezeigten Sonden sind wiederverwendbar. Das heißt, dass sie bei einem Wechsel der Kokillen-Kupferplatte, der regelmäßig fällig wird, auf einfache Art und Weise ausgebaut werden können und inklusive der Lichtwellenleiter in eine neue Kokille wieder eingebaut werden können, was die erfindungsgemäßen Sonden besonders kosteneffektiv macht. Die Sonden bestehen vorzugsweise aus einem wärmeleitenden Material, z. B. aus Edelstahl oder Kupfer.

Weiterhin ist es im Allgemeinen möglich, dass die Lichtwellenleiter 2 zum Zweck eines verbesserten Schutzes vor äußeren Einflüssen einen Edelstahlmantel besitzen. Zudem können generell mehrere solcher Lichtleiter 2 innerhalb eines Edelstahlmantels bzw. einer Edelstahlhülle angeordnet sein, so dass selbst bei selten auftretenden Defekten einer Faser eine andere Faser, die bereits in der Hülle verlegt ist, weiterverwendet werden kann. Zudem ist es denkbar, dass innerhalb einer Hülle mehrere Fasern zur Messung angeordnet werden, wodurch die Messung weiter an Genauigkeit gewinnt, da so der Abstand der Messstellen durch Versetzen der Fasern beliebig eng gewählt werden kann. Die Lichtwellenleiterfasern 2 können vorzugsweise einen Durchmesser zwischen 0,1 mm und 0,2 mm oder sonstige übliche Durchmesser besitzen. Der Durchmesser einer Hülle, aus z. B. Edelstahl, ist in der Regel kleiner als 5 mm.

Die Lichtwellenleiter können zudem über Linsenkupplungen, sogenannte "Extended-Beam-Connectors", mit der Auswertungseinrichtung verbunden werden. Solche Kupplungen erlauben eine zuverlässige Signalübertragung, sind sehr robust und einfach zu handhaben.

**Bezugszeichenliste**

| | |
|---|---|
| 1. | Kokille |
| 2. | Lichtwellenleiter |
| 3. | Messstelle |
| 4. | Nut |
| 5. | Dehnschraube |
| 6. | Gießrohr |
| 7. | Schmelze |
| 8. | Kokillen-Kupferplatte |
| 11. | Sonde |
| 21. | Sonde |
| 22. | erster Bereich |
| 22'. | zweiter Bereich |
| 22". | dritte Bereich |
| 22"'. | vierter Bereich |
| 31. | Sonde |
| 41. | Sonde |

## Patentansprüche

1. System zur Bestimmung der Höhe des Gießspiegels durch Temperaturerfassung in einer Kokille (1) zum Metallgießen im Bereich des Gießspiegels, umfassend:
eine Kokillen-Kupferplatte (8) der Kokille (1);
mindestens eine Sonde (11, 21)
wobei die Sonde (11, 21) mit mindestens einem Lichtwellenleiter (2) versehen ist;
wobei entlang des Lichtwellenleiters (2) eingeprägte Messstellen (3) zur Temperaturerfassung des Metalls in der Kokille (1) mittels des Faser-Bragg-Gitter-Verfahrens angeordnet sind,
wobei die Sonde (11, 21) in die Kokillen-Kupferplatte (8) der Kokille (1) lösbar eingebaut ist; und
wobei eine Temperaturauswertungseinrichtung zur Bestimmung der Höhe des Gießspiegels mit dem mindestens einen Lichtwellenleiter (2) verbunden ist,
wobei die Sonde (11, 21) im Wesentlichen quaderförmig ist, so dass sie in eine Nut (4) auf der der Schmelze (7) abgewandten Seite der Kokillen-Kupferplatte (8) verbaut ist.

2. System nach Anspruch 1,
wobei in dem Teil der Sonde (11, 21), der die Kupferplatte in Richtung des Gießspiegels kontaktiert, mehrere parallele Nuten (4) vorgesehen sind, die senkrecht zum Gießspiegel verlaufen und in denen jeweils der mindestens eine Lichtwellenleiter (2) angeordnet ist.

3. System nach Anspruch 2,
wobei in jeder Nut (4) mindestens ein Lichtwellenleiter (2) angeordnet ist und
die Lichtwellenleiter (2) der Länge nach versetzt in den Nuten (4) angeordnet sind.

4. System zur Bestimmung der Höhe des Gießspiegels durch Temperaturerfassung in einer Kokille (1) zum Metallgießen im Bereich des Gießspiegels, umfassend:
eine Kokillen-Kupferplatte (8) der Kokille (1);
mindestens eine Sonde (11, 21)
wobei die Sonde (11, 21) mit mindestens einem Lichtwellenleiter (2) versehen ist;
wobei entlang des Lichtwellenleiters (2) eingeprägte Messstellen (3) zur Temperaturerfassung des Metalls in der Kokille (1) mittels des Faser-Bragg-Gitter-Verfahrens angeordnet sind,
wobei die Sonde (11, 21) in die Kokillen-Kupferplatte (8) der Kokille (1) lösbar eingebaut ist; und
wobei eine Temperaturauswertungseinrichtung zur Bestimmung der Höhe des Gießspiegels mit dem mindestens einen Lichtwellenleiter (2) verbunden ist,
wobei die Sonde im Wesentlichen die Form eines Zylinders besitzt und um diesen Zylinder, der mindestens eine Lichtwellenleiter (2) spiralförmig aufgewickelt ist und die Sonde (11, 21) in eine Bohrung in der Kokillen-Kupferplatte (8) eingesetzt ist.

5. System nach Anspruch 4,
wobei mehrere Lichtwellenleiter (2) spiralförmig um den Zylinder aufgewickelt sind und die Lichtwellenleiter (2) jeweils in diskreten, hintereinanderliegenden Bereichen auf dem Zylinder aufgewickelt sind.

6. System zur Bestimmung der Höhe des Gießspiegels durch Temperaturerfassung in einer Kokille (1) zum Metallgießen im Bereich des Gießspiegels, umfassend:
eine Kokillen-Kupferplatte (8) der Kokille (1);
mindestens eine Sonde (11, 21)
wobei die Sonde (11, 21) mit mindestens einem Lichtwellenleiter (2) versehen ist;
wobei entlang des Lichtwellenleiters (2) eingeprägte Messstellen (3) zur Temperaturerfassung des Metalls in der Kokille (1) mittels des Faser-Bragg-Gitter-Verfahrens angeordnet sind,
wobei die Sonde (11, 21) in die Kokillen-Kupferplatte (8) der Kokille (1) lösbar eingebaut ist; und
wobei eine Temperaturauswertungseinrichtung zur Bestimmung der Höhe des Gießspiegels mit dem mindestens einen Lichtwellenleiter (2) verbunden ist,
wobei die Sonde (11, 21) die Form einer Platte besitzt, die auf der der Schmelze (7) abgewandten Seite der Kokillen-Kupferplatte (8) angeordnet ist oder in einem Schlitz in der Kokillen-Kupferplatte (8) angeordnet ist, wobei der mindestens eine Lichtwellenleiter (2) auf der Seite der Sonde (11, 21) angeordnet ist, die die Kokillen-Kupferplatte (8) kontaktiert.

7. System nach Anspruch 6,
wobei der mindestens eine Lichtwellenleiter (2) mäander- und / oder spiralförmig auf der Platte angeordnet ist.

8. System nach Anspruch 6 oder 7,
wobei der mindestens eine Lichtwellenleiter auf der Sonde (11, 21) in Nuten (4) angeordnet ist.

9. Verfahren zur Gießspiegelmessung in einer Kokille (1) zum Metallgießen wobei zur Bestimmung der Höhe des Gießspiegels die Temperaturverteilung im Bereich des Gießspiegels über die Höhe der Kokille (1) erfasst wird, wobei diese Temperaturerfassung mittels eines Systems gemäß den Ansprüchen 1-8 erfolgt,
wobei Laserlicht in die Messfasern (2) geleitet wird und aus der erfassten Temperaturverteilung mittels einer Temperaturauswertungseinrichtung nach dem Faser-Bragg-Gitter-Verfahren die Höhe des Gießspiegels bestimmt wird.

10. Verfahren nach Anspruch 9,
wobei zur Regelung des Angießvorgangs im Bereich des unteren Endes der Kokille (1), mindestens eine weitere Messsonde zur Temperaturerfassung angeordnet wird, die faseroptische Sensoren und / oder Thermoelemente umfasst.

11. Verfahren nach einem der vorhergehenden Ansprüche 9 oder 10,
wobei in Breitenrichtung, senkrecht zur Gießrichtung, mindestens zwei Messsonden angeordnet werden, so dass die Gießspiegelhöhe mindestens an zwei Messstellen (3) in Breitenrichtung bestimmt werden kann, so dass Informationen über die Form einer Gießspiegelwelle erhalten werden.

12. Verfahren nach einem der vorhergehenden Ansprüche 9 bis 11,
wobei die Daten der Auswertungseinrichtung an ein Regelungssystem weitergeleitet werden, das die Gießspiegelhöhe in der Kokille (1) steuern kann.

## Claims

1. System for determining the height of the casting meniscus by temperature detection in the region of the casting meniscus in a mould (1) for metal casting, comprising:
a mould copper plate (8) of the mould (1);
at least one probe (11, 21),
wherein the probe (11, 21) is provided with at least one optical waveguide (2);
wherein measuring points (3) impressed along the optical waveguide (2) are arranged for temperature detection of the metal in the mould (1) by means of the fibre Bragg grating method;
wherein the probe (11, 21) is detachably installed in the mould copper plate (8) of the mould (1); and
wherein a temperature evaluating device for determining the height of the casting meniscus is connected with the at least one optical waveguide (2),
wherein the probe (11, 21) is substantially block-shaped so that it is incorporated in a groove (4), on the side of the mould copper plate (8) remote from the melt (7).

2. System according to claim 1, wherein a plurality of parallel grooves (4), which extend perpendicularly to the casting meniscus and in each of which the at least one optical waveguide (2) is arranged, is provided in the part of the probe (11, 21) contacting the copper plate in the direction of the casting meniscus.

3. System according to claim 2, wherein at least one optical waveguide (2) is arranged in each groove (4) and the optical waveguides (2) are arranged offset in length in the grooves (4).

4. System for determining the height of the casting meniscus by temperature detection in the region of the casting meniscus in a mould (1) for metal casting, comprising:
a mould copper plate (8) of the mould (1);
at least one probe (11, 21),
wherein the probe (11, 21) is provided with at least one optical waveguide (2);
wherein measuring points (3) impressed along the optical waveguide (2) are arranged for temperature detection of the metal in the mould (1) by means of the fibre Bragg grating method;
wherein the probe (11, 21) is detachably installed in the mould copper plate (8) of the mould (1); and
wherein a temperature evaluating device for determining the height of the casting meniscus is connected with the at least one optical waveguide (2),
wherein the probe has substantially the form of a cylinder and the at least one optical waveguide (2) is helically wound around this cylinder, the probe (11, 21) being inserted in a bore in the mould copper plate (8).

5. System according to claim 4, wherein several optical waveguides (2) are helically wound around the cylinder and the optical waveguides (2) are wound on the cylinder respectively in discrete regions arranged in succession.

6. System for determining the height of the casting meniscus by temperature detection in the region of the casting meniscus in a mould (1) for metal casting, comprising:
a mould copper plate (8) of the mould (1);
at least one probe (11, 21),
wherein the probe (11, 21) is provided with at least one optical waveguide (2);
wherein measuring points (3) impressed along the optical waveguide (2) are arranged for temperature detection of the metal in the mould (1) by means of the fibre Bragg grating method;
wherein the probe (11, 21) is detachably installed in the mould copper plate (8) of the mould (1); and
wherein a temperature evaluating device for determining the height of the casting meniscus is connected with the at least one optical waveguide (2),
wherein the probe (11, 21) has the form of a plate, which is arranged on the side of the mould copper plate (8) remote from the melt (7) or is arranged in slot in the mould copper plate (8), wherein the at least one optical waveguide (2) is arranged on the side of the probe (11, 21) contacting the mould copper plate (8).

7. System according to claim 6, wherein the at least one optical waveguide (2) is arranged in meandering and/or spiral form on the plate.

8. System according to claim 6 or 7, wherein the at least one optical waveguide is arranged on the probe (11, 21) in grooves (4).

9. Method for measurement of the casting meniscus in a mould (1) for metal casting, wherein for determination of the height of the casting meniscus the temperature distribution in the region of the casting meniscus is detected over the height of the mould (1),
wherein this temperature detection is carried out by means of a system according to any one of claims 1 to 8,
wherein laser light is conducted in the measuring fibres (2) and the height of the casting meniscus is determined from the detected temperature distribution by means of a temperature evaluating device in accordance with the fibre Bragg grating method.

10. Method according to claim 9, wherein for regulation of the casting-on process in the region of the lower end of the mould (1) at least one further measuring probe, which comprises fibre-optical sensors and/or thermoelements, is arranged for temperature detection.

11. Method according to one of the preceding claims 9 and 10, wherein at least two measuring probes are arranged in width direction perpendicularly to the casting direction so that the casting meniscus height can be determined at at least two measuring points (3) in width direction so that data about the form of a casting meniscus wave are obtained.

12. Method according to any one of the preceding claims 9 to 11, wherein the data of the evaluating device are passed on to a regulating system which can control the casting meniscus height in the mould (1).

## Revendications

1. Système pour la détermination de la hauteur de la surface du bain par l'enregistrement de la température dans une lingotière (1) destinée à la coulée de métal, dans la zone de la surface du bain, comprenant :
une plaque de cuivre (8) de la lingotière (1);
au moins une sonde (11, 21),
la sonde (11, 21) étant munie d'au moins un câble à fibres optiques (2);
des points de mesure (3) appliqués par estampage pour l'enregistrement de la température du métal dans la lingotière (1), suivant le procédé de réseau de fibres de Bragg, étant disposés le long du câble à fibres optiques (2),
la sonde (11, 21) étant incorporée de manière amovible dans la plaque de cuivre (8) de la lingotière (1), et
un mécanisme d'évaluation de la température pour déterminer la hauteur de la surface du bain étant relié audit au moins un câble à fibres optiques (2), dans lequel la sonde (11, 21) possède essentiellement une configuration parallélépipédique, si bien qu'elle est insérée dans une rainure (4) du côté de la plaque de cuivre de lingotière (8) qui se détourne de la masse fondue (7).

2. Système selon la revendication 1, dans lequel, dans la partie de la sonde (11, 21) qui entre en contact avec la plaque de cuivre dans la direction de la surface du bain, on prévoit plusieurs rainures parallèles (4) qui s'étendent perpendiculairement à la surface du bain et dans lesquelles vient se disposer respectivement ledit au moins un câble à fibres optiques (2).

3. Système selon la revendication 2, dans lequel, dans chaque rainure (4) vient se disposer au moins un câble à fibres optiques (2) et les câbles à fibres optiques (2) étant disposés dans les rainures (4) à l'état décalé sur leur longueur.

4. Système pour la détermination de la hauteur de la surface du bain par l'enregistrement de la température dans une lingotière (1) destinée à la coulée de métal, dans la zone de la surface du bain, comprenant :
une plaque de cuivre (8) de la lingotière (1);
au moins une sonde (11, 21),
la sonde (11, 21) étant munie d'au moins un câble à fibres optiques (2) ;
des points de mesure (3) appliqués par estampage pour l'enregistrement de la température du métal dans la lingotière (1), suivant le procédé de réseau de fibres de Bragg, étant disposés le long du câble à fibres optiques (2),
la sonde (11, 21) étant incorporée de manière amovible dans la plaque de cuivre (8) de la lingotière (1), et
un mécanisme d'évaluation de la température pour déterminer la hauteur de la surface du bain étant relié audit au moins un câble à fibres optiques (2), la sonde possédant essentiellement la forme d'un cylindre, ledit au moins un câble à fibres optiques (2) venant s'enrouler en spirale autour de ce cylindre et la sonde (11, 21) étant insérée dans un alésage dans la plaque de cuivre (8) de la lingotière.

5. Système selon la revendication 4, dans lequel plusieurs câbles à fibres optiques (2) sont enroulés en spirale autour du cylindre, les câbles à fibres optiques 2 étant enroulés respectivement sur le cylindre en zones discrètes les unes derrière les autres.

6. Système pour la détermination de la hauteur de la surface du bain par l'enregistrement de la température dans une lingotière (1) destinée à la coulée de métal, dans la zone de la surface du bain, comprenant :
une plaque de cuivre (8) de la lingotière (1) ;
au moins une sonde (11, 21),
la sonde (11, 21) étant munie d'au moins un câble à fibres optiques (2) ;
des points de mesure (3) appliqués par estampage pour l'enregistrement de la température du métal dans la lingotière (1), suivant le procédé de réseau de fibres de Bragg, étant disposés le long du câble à fibres optiques (2),
la sonde (11, 21) étant incorporée de manière amovible dans la plaque de cuivre (8) de la lingotière (1), et
un mécanisme d'évaluation de la température pour déterminer la hauteur de la surface du bain étant relié audit au moins un câble à fibres optiques (2), la sonde (11, 21) prenant la forme d'une plaque qui est disposée sur le côté de la plaque de cuivre (8) de la lingotière du côté qui se détourne de la masse fondue (7) ou bien qui est disposée dans une fente pratiquée dans la plaque de cuivre (8) de la lingotière, ledit au moins un câble à fibres optiques (2) étant disposé du côté de la sonde (11, 21) qui entre en contact avec la plaque de cuivre (8) de la lingotière.

7. Système selon la revendication 6, dans lequel ledit au moins un câble à fibres optiques (2) est disposé sur la plaque en méandres et/ou en spirale.

8. Système selon la revendication 6 ou 7, dans lequel ledit au moins un câble à fibres optiques est disposé sur la sonde (11, 21) dans des rainures (4).

9. Procédé pour la mesure de la surface du bain dans une lingotière (1) destiné à la coulée du métal, dans lequel, pour la détermination de la hauteur de la surface du bain, on enregistre la distribution de température dans la zone de la surface du bain au-dessus de la hauteur de la lingotière (1), cet enregistrement de la température ayant lieu au moyen d'un système selon les revendications 1 à 8,
de la lumière laser étant guidée dans les fibres de mesure (2) et, à partir de la distribution de température enregistrée, on détermine la hauteur de la surface du bain au moyen d'un mécanisme d'évaluation de la température conformément au procédé de réseau de fibres de Bragg.

10. Procédé selon la revendication 9, dans lequel, pour le réglage du processus de coulée dans la zone de l'extrémité inférieure de la lingotière, on dispose au moins une sonde de mesures supplémentaires pour l'enregistrement de la température qui comprend des capteurs du type à fibres optiques et/ou des thermocouples.

11. Procédé selon l'une quelconque des revendications précédentes 9 ou 10, dans lequel, dans le sens de la largeur, perpendiculairement à la direction de coulée, on dispose au moins deux sondes de mesure, si bien que l'on peut déterminer la hauteur de la surface du bain au moins à deux endroits de mesure (3) dans le sens de la largeur, de telle sorte que l'on obtient des informations concernant l'ondulation de la surface du bain.

12. Procédé selon l'une quelconque des revendications précédentes 9 à 11, dans lequel les données du mécanisme d'évaluation sont transmises à un système de réglage qui peut régler la hauteur de la surface du bain dans la lingotière (1).
